# EUROPÄISCHE PATENTSCHRIFT

(11) **EP 0 816 855 B1**
(45) Veröffentlichungstag und Bekanntmachung des Hinweises auf die Patenterteilung: **27.11.2002**
(21) Anmeldenummer: 97103215.6
(22) Anmeldetag: 27.02.1997
(51) Int. Cl.: G01P 15/11

(54) **Induktiver Beschleunigungssensor**
Inductive acceleration sensor
Capteur inductif d'accélération

(30) Priorität: 29.06.1996 DE 19626263
(43) Veröffentlichungstag der Anmeldung: 07.01.1998
(73) Patentinhaber: Volkswagen Aktiengesellschaft, 38436 Wolfsburg (DE)
(72) Erfinder: Schwant, Wilfried, Dipl.-Ing., 38536 Meinersen (DE)

(56) Entgegenhaltungen:
- DE-A- 3 205 560
- FR-A- 2 090 526
- US-A- 4 448 059
- EBRAHIM ABBASPOUR-SANI ET AL: "A LINEAR ELECTROMAGNETIC ACCELEROMETER" SENSORS AND ACTUATORS A, Bd. A44, Nr. 2, August 1994, LAUSANNE, Seiten 103-109, XP000483971

## Beschreibung

Die Erfindung betrifft einen induktiven Beschleunigungssensor nach dem Oberbegriff des Anspruchs 1.

Ein bekannter gattungsgemäßer induktiver Beschleunigungssensor (DE 32 05 560 C2) enthält eine Sensorspule, die fest und bewegungsübertragend mit dem Meßobjekt verbunden ist, sowie einen beweglichen Magneten als träge Masse im Bereich der Sensorspule, der in Richtung und beim Auftreten einer zu messenden Beschleunigung relativ zum Meßobjekt und damit zur Sensorspule beweglich gehalten ist. Somit wird bei einer Relativgeschwindigkeit zwischen dem beweglichen Magneten und der Sensorspule dort eine geschwindigkeitsabhängige Spannung induziert. Der Sensorspule ist eine Auswerteeinrichtung nachgeschaltet, mit der aus einem induzierten Spannungswert ein entsprechend zugeordneter Beschleunigungswert ermittelbar ist.

Der bewegliche Magnet ist hier als Permanentmagnet ausgeführt, der elastisch in einer Kernhülse der Sensorspule gelagert ist. Die in der Sensorspule induzierte Spannung hängt neben der Relativgeschwindigkeit zwischen der Sensorspule und dem Permanentmagneten von der Anzahl der vom Magnetfeld des Permanentmagneten erfaßten Spulenwindungen ab, wobei das Magnetfeld des Permanentmagneten kreisformähnlich ist. Durch fallweise Unterschiede dieser schwierig beherrschbaren Gegebenheiten kann das Meßergebnis für die Beschleunigungswerte bei Verwendung eines Permanentmagneten verfälscht sein. Bei der Verwendung eines solchen Beschleunigungssensors als Crash-Sensor zur Auslösung einer Insassenschutzvorrichtung in einem Fahrzeug ab einer definierten Aufprallgeschwindigkeit ergeben sich daher Probleme diese Aufprallgeschwindigkeit so genau zu erfassen, daß die nachgeschaltete Sicherheitseinrichtung nicht unnötig bei zu geringer Aufprallgeschwindigkeit oder erst bei einer sicherheitstechnisch zu hohen Aufprallgeschwindigkeit aktiviert wird.

Es sind weiter unterschiedlich aufgebaute Beschleunigungssensoren unter Verwendung von Permanentmagneten bekannt:

In einer Kombination eines meßobjektfestem Reedschalters und eines federnd aufgehängtem Permanentmagneten als seismische Masse wird bei einer Annäherung des Permanentmagneten an einen Reedkontakt dieser bei einem bestimmten Annäherungswert entsprechend einem definierten Beschleunigungsschwellwert geschlossen (DE 40 02 845 C1; DE 41 28 347 C1; DE 42 02 418 A1). Diese Beschleunigungssensoren sind zur Auslösung von Sicherheitssystemen in Kraftfahrzeugen beim Überschreiten des Beschleunigungsschwellwertes verwendet. Auch hier ist durch Schaltunsicherheiten eine nur relativ ungenaue Auslösebeschleunigung ermittelbar.

Bei einem anderen Aufbau eines bekannten Beschleunigungssensors (DE 40 31 330 A1) wird das Magnetfeld eines meßobjektfesten Permanentmagneten als Federkraft für ein seismisches Sensorelement verwendet. Beim Auftreten einer Beschleunigung und nach Überwinden eines Teils des Magnetfelds schließt das bewegliche Sensorelement einen Schalter zur Auslösung eines Insassensicherheitselements in einem Fahrzeug. Auch hierbei ist wegen Schaltunsicherheiten die Auslösebeschleunigung nur relativ ungenau zu ermitteln.

Aufgabe der Erfindung ist es, einen gattungsgemäßen induktiven Beschleunigungsaufnehmer so weiterzubilden, daß die Meßgenauigkeit erhöht wird.

Diese Aufgabe wird mit den kennzeichnenden Merkmalen des Anspruchs 1 gelöst.

Gemäß Anspruch 1 ist der bewegliche Magnet als träge, seismische Masse eine Magnetspule eines Elektromagneten. Im Bereich der Magnetspule ist ein Permanentmagnet meßobjektfest, d. h. gegenüber der Sensorspule unbeweglich angeordnet. Bei einer Beschleunigung und damit einer Relativbewegung zwischen der Magnetspule und dem meßobjektfesten Permanentmagneten wird in Abhängigkeit der Relativgeschwindigkeit eine Initialisierungsspannung induziert. Der Magnetspule ist eine Initialisierungseinrichtung mit einer Schwellwertschaltung und einem Spannungsgeber nachgeschaltet. Beim Auftreten der o. g. Relativbewegung und beim Überschreiten einer bestimmten Größe einer induzierten Initialiserungsspannung wird der Spannungsgeber zur Erregung der Magnetspule geschaltet.

Damit wird erreicht, daß bei entsprechender Auslegung des Spannungsgebers, des Permanentmagneten und der beweglichen Magnetspule dort ein genau definiertes Magnetfeld erzeugt wird. Ein so genau definiertes Magnetfeld mit gleichbleibenden Meßverhältnissen ist bei der Verwendung eines Permanentmagneten entsprechend dem Stand der Technik nicht zu erreichen. Damit wird insgesamt ein genaueres Meßergebnis für die erfaßten Beschleunigungen erhalten. Bei Verwendung des Beschleunigungssensors als Crash-Sensor in einem Fahrzeug mit auslösbarer Insassenschutzvorrichtung, insbesondere für die Auslösung eines Front- oder Seitenairbags können die Aufprallgeschwindigkeiten, ab denen Sicherheitseinrichtungen aktiviert werden sollen, genauer erfaßt und festgelegt werden.

Zweckmäßig wird dazu in der der Sensorspule nachgeschalteten Auswerteeinrichtung eine Schwellwertschaltung verwendet, in der ein induzierter Spannungswert mit einem Schwellwert entsprechend einem bestimmten Beschleunigungswert verglichen wird. Beim Überschreiten dieses Schwellwerts wird ein Schaltsignal abgegeben, das insbesondere zur Aktivierung von Sicherheitseinrichtungen wie Airbags, Gurtstrammern, etc. eingesetzt werden kann. Besonders vorteilhaft kann ein solches Schaltsignal unmittelbar in den Zündkreis elektrisch auslösbarer Sicherheitseinrichtungen eingeführt werden.

Eine besonders kompakte und effektiv wirkende Anordnung wird erhalten, wenn der Permanentmagnet als Stabmagnet im Kernbereich der Magnetspule, ggf. nur in einem Kernbereich, der bei weiterer Auslenkung der Magnetspule freigegeben wird, liegt und diese in einer Kernhülse der Sensorspule verschiebbar ist. Schon bei geringen Auslenkungen der anfangs nicht erregten Magnetspule gegenüber dem Permanentmagneten wird eine ausreichend große Initialisierungsspannung zur Ansteuerung der Spannungsquelle zur Erregung der Magnetspule erzeugt.

In an sich bekannter Weise ist auch hier vorteilhaft, die Magnetspule als seismische Masse in Richtung der zu erfassenden Beschleunigung federnd abzustützen. Die geometrischen und elektrischen Gegebenheiten sind dabei in Verbindung mit der Federkonstanten so zu dimensionieren, daß ein ausreichend hohes Beschleunigungsmeßsignal erzeugt wird.

In einer vorteilhaften konkreten, schaltungstechnischen Ausführung sind die Schwellwerteinheit in der Initalisierungseinrichtung und/oder die Schwellwerteinheit in der Auswerteeinrichtung jeweils als Schmitt-Trigger ausgeführt. Die jeweiligen Schwellwerte sind dabei als eingangsseitige Vergleichspannungen zugeführt, die jeweils einfach durch einen Spannungsteiler erzeugbar sind. Beim Überschreiten der Vergleichspannung im Schmitt-Trigger der Initialisierungseinrichtung wird dessen Ausgang als Spannungsquelle zur Erregung der Magnetspule zurückgekoppelt. Diese zurückgeführte Spannung und Erregung ist so groß dimensioniert und/oder der Permanentmagnet ist nur am anfänglichen Auslenkbereich so angeordnet, daß die durch den Permanentmagnet zusätzlich induzierte Spannung in der Magnetspule so vemachlässigbar gering ist, daß dadurch das Meßergebnis insgesamt nicht verfälscht ist. Beim Überschreiten der Vergleichsspannung im Schmitt-Trigger der Auswerteeinrichtung schaltet der Ausgang als Schaltsignal von "low" auf "high". Dieses Schaltsignal ist unmittelbar in einer nachgeschalteten Auslöseeinrichtung für Insassenschutzvorrichtungen verwendbar.

Anhand einer Zeichnung wird ein Ausführungsbeispiel der Erfindung näher erläutert.

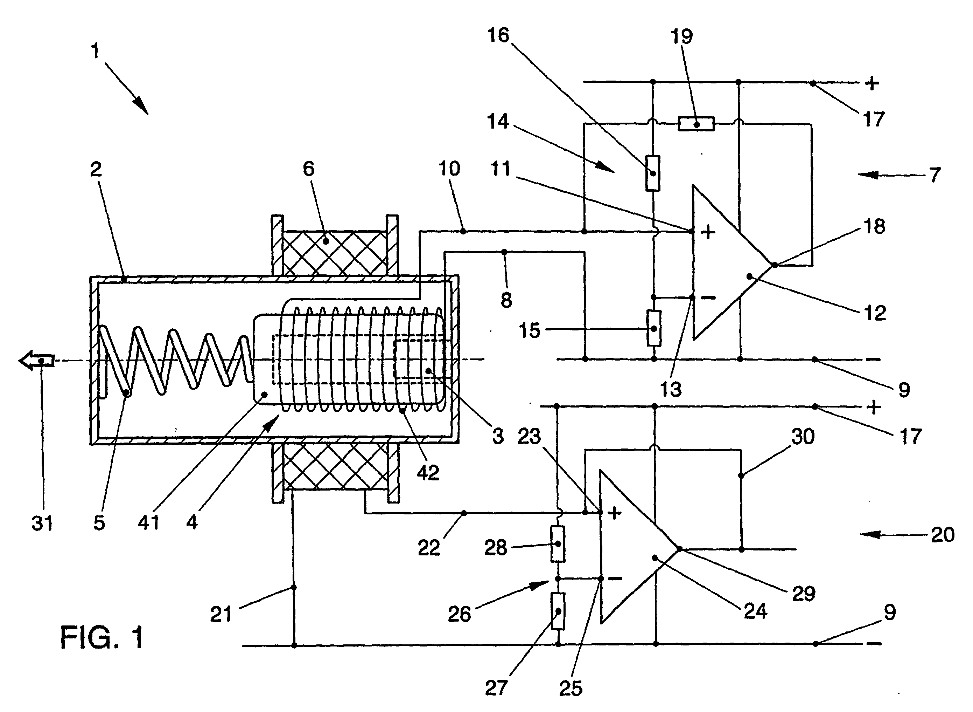

Die einzige Figur zeigt einen induktiven Beschleunigungssensor 1 in schematischer Darstellung. In einem Gehäuse 2 ist ein mit diesem fest verbundener, axial ausgerichteter Stabmagnet als Permanentmagnet 3 angeordnet. Über den relativ kurzen Stabmagnet 3 ist eine Magnetspule 4 eines Elektromagneten gesteckt, die beweglich gegenüber dem Permanentmagnet 3 verschiebbar über eine Feder 5 am Gehäuse 2 abgestützt ist. Die Magnetspule 4 besteht aus einer Kernhülse 41, die einen Großteil der trägen Masse der Magnetspule 4 ausmacht und einer Spulenwicklung 42.

Das Gehäuse 2 bildet eine Kernhülse einer Sensorspule 6, die den Bereich der Magnetspule 4 in deren Ruhestellung umfaßt.

Der Magnetspule 4 ist ein erster Schmitt-Trigger 7 nachgeschaltet, wobei ein Spulenende über eine Leitung 8 mit der Minusleitung 9 einer Spannungsversorgung eines Kraftfahrzeugs verbunden ist. Das andere Spulenende ist über eine Leitung 10 mit einem Pluseingang 11 eines Operationsverstärkers als Komperators 12 verbunden.

Der Minuseingang 13 des Komperators 12 ist mit einem Spannungsteiler 14, bestehend aus Widerständen 15 und 16, verbunden. Der Spannungsteiler liegt zwischen der Minusleitung 9 und einer Plusleitung 17 der Fahrzeugspannungsversorgung.

Ein Ausgang 18 des Komperators 12 ist über einen Widerstand 19 auf die Leitung 10 der Magnetspule 4 zurückgekoppelt.

Der Sensorspule 6 ist ein zweiter Schmitt-Trigger 20 nachgeschaltet. Ein Spulenausgang ist dazu über eine Leitung 21 mit der Minusleitung 9 der Kraftfahrzeugspannungsquelle verbunden, das andere Spulenende ist über eine Leitung 22 mit einem Pluseingang 23 eines zweiten Operationsverstärkers als Komperator 24 verbunden. Ein Minuseingang 25 des Komperators 24 ist an einem Spannungsteiler 26 bestehend aus Widerständen 27, 28 angeschlossen, wobei der Spannungsteiler 26 zwischen der Minusleitung 9 und der Plusleitung 17 der Fahrzeugspannungsversorgung liegt. Ein Ausgang 29 des Komperators 24 ist über eine Leitung 30 auf den Pluseingang 23 zurückgekoppelt. An den Ausgang 29 ist zudem eine (nicht dargestellte) Auslöseeinrichtung für eine Insassenschutzvorrichtung, bestehend aus einem oder mehreren Airbags, Gurtstrammern, etc., angeschlossen.

Die dargestellte Anordnung hat folgende Funktion: der Beschleunigungssensor 1 ist beispielsweise in Fahrtrichtung entsprechend einem Pfeil 31 in einem Kraftfahrzeug als Crash-Sensor angeordnet. Bei einer Fahrzeugkollision mit hoher Aufprallgeschwindigkeit in Frontalrichtung und einer großen Fahrzeugverzögerung als negative Beschleunigung wird die beweglich gehaltene Magnetspule 4 als träge Masse gegen die Abstützkraft der Feder 5 in Richtung des Pfeils 31 ausgelenkt.

Durch die bereits zu Beginn der Auslenkung auftretende Relativbewegung zwischen der Magnetspule und dem gehäusefesten Permanentmagneten 3 wird in der Magnetspule 4 eine Induktionsspannung als Initialisierungsspannung erzeugt. Diese relativ kleine Induktionsspannung aktiviert den ersten Schmitt-Trigger 7, wodurch ein größerer Strom über den Widerstand 19 durch die Windung der Magnetspule 4 fließt, womit dann über den weiteren Auslenkweg unabhängig vom Magnetfeld des nicht mehr überstrichenen Permanentmagneten 3 ein gleichbleibendes Magnetfeld während des Beschleunigungsmeßvorgangs erzeugt wird.

Durch die weitere Auslenkung und Bewegung dieses Magnetfelds der Magnetspule 4 gegenüber der Sensorspule 6 wird je nach Größe der Relativgeschwindigkeit eine Spannung als Maß für die negative Beschleunigung bzw. Verzögerung in der Sensorspule 6 induziert. Diese induzierte Spannung wird mit der am Spannungsteiler 26 abgegriffenen Spannung im Komperator 24 verglichen. Diese abgegriffene Spannung stellt einen definierten Schwellwert dar, so daß bei Überschreitung durch die induzierte Spannung am Ausgang 29 des Schmitt-Triggers 20 ein Schaltsignal von "low" auf "high" schaltet. Dieses Schaltsignal bewirkt in Verbindung mit der nachgeordneten Auslöseeinheit eine Aktivierung der Insassenschutzvorrichtung.

## Patentansprüche

1. Induktiver Beschleunigungssensor,
mit einer Sensorspule (6), die fest mit dem Meßobjekt verbunden ist,
mit einem beweglichen Magneten (4) im Bereich der Sensorspule (6), der in Richtung und beim Auftreten einer zu messenden Beschleunigung relativ zum Meßobjekt und damit zur Sensorspule (6) beweglich gehalten ist, so daß bei einer Relativgeschwindigkeit zwischen Magnet (4) und Sensorspule (6) dort eine geschwindigkeitsabhängige Spannung induzierbar ist, und
mit einer der Sensorspule (6) nachgeschalteten Auswerteeinrichtung,
**dadurch gekennzeichnet,**
**daß** der bewegliche Magnet als träge Masse eine Magnetspule (4) eines Elektromagneten ist,
**daß** im Bereich der Magnetspule (4) ein Permanentmagnet (3) meßobjektfest angeordnet ist, so daß bei einer Beschleunigung und damit einer Relativbewegung zwischen der Magnetspule (4) und dem Permanentmagneten (3) eine geschwindigkeitsabhängige Initialisierungsspannung induzierbar ist, und
**daß** der Magnetspule (4) eine Initialisierungseinrichtung (7) mit einer Schwellwertschaltung und einem Spannungsgeber nachgeschaltet ist, die beim Überschreiten eines bestimmten Wertes einer induzierten Initialisierungsspannung den Spannungsgeber zur Erregung der Magnetspule (4) mit einem genau definierten Magnetfeld schaltet.

2. Induktiver Beschleunigungssensor nach Anspruch 1, **dadurch gekennzeichnet, daß** die Magnetspule (4) aus einer im wesentlichen die träge Masse darstellenden Kernhülse (41) und einer darauf angebrachten Spulenwicklung (42) besteht.

3. Induktiver Beschleunigungssensor nach Anspruch 1 oder Anspruch 2, **dadurch gekennzeichnet, daß** die der Sensorspule (6) nachgeschaltete Auswerteeinrichtung eine zweite Schwellwertschaltung (20) umfaßt, in der ein induzierter Spannungswert mit einem Schwellwert entsprechend einem bestimmten Beschleunigungswert vergleichbar ist und nach Überschreiten dieses Schwellwerts ein Schaltsignal abgebbar ist.

4. Induktiver Beschleunigungssensor nach einem der Ansprüche 1 bis 3, **dadurch gekennzeichnet, daß** der Beschleunigungssensor als Crash-Sensor in einem Fahrzeug mit auslösbarer Insassenschutzvorrichtung angebracht ist und die Insassenschutzvorrichtung durch das Schaltsignal auslösbar ist.

5. Induktiver Beschleunigungssensor nach einem der Ansprüche 1 bis 4, **dadurch gekennzeichnet, daß** die Insassenschutzvorrichtung zur Auslösung elektrisch zündbar ist und der Zündkreis durch das Schaltsignal aktivierbar ist.

6. Induktiver Beschleunigungssensor nach einem der Ansprüche 1 bis 5, **dadurch gekennzeichnet, daß** der Permanentmagnet (3) ein Stabmagnet ist, der in einem endseitigen, bei einer größeren Auslenkung nicht mehr überstrichenen Kernbereich der Magnetspule (4) liegt und diese in einer Kernhülse (2) der Sensorspule (6) verschiebbar gehalten ist.

7. Induktiver Beschleunigungssensor nach einem der Ansprüche 1 bis 6, **dadurch gekennzeichnet, daß** die Magnetspule (4) in Richtung der zu erfassenden Beschleunigung durch wenigstens eine Feder (5) abgestützt gehalten ist.

8. Induktiver Beschleunigungssensor nach einem der Ansprüche 1 bis 7, **dadurch gekennzeichnet, daß** die erste Schwellwerteinheit der Initialisierungseinrichtung und/oder die zweite Schwellwerteinheit der Auswerteeinrichtung jeweils als erste und/oder zweite Schmitt-Trigger (7, 20) ausgebildet sind, wobei der Schwellwert jeweils als eingangsseitige Vergleichsspannung von zugeordneten Spannungsteilern (14, 16) abgegriffen ist, und beim Überschreiten der Vergleichsspannung im ersten Schmitt-Trigger dessen Ausgang zur Erregung der Magnetspule mit einem größeren Strom zurückgekoppelt ist und beim Überschreiten der Vergleichsspannung im zweiten Schmitt-Trigger der mit einer Auslöseeinheit verbundene Ausgang als Schaltsignal von "low" auf "high" schaltet.

## Claims

1. Inductive acceleration sensor having a sensor coil (6) which is permanently connected to the measured object, having a movable magnet (4) in the region of the sensor coil (6), which magnet (4) is held so as to be movable in direction and relative to the measured object, and thus to the sensor coil (6), when an acceleration to be measured occurs, so that when there is relative velocity between the magnet (4) and sensor coil (6), a velocity-dependent voltage can be induced there, and
having a valuation device which is connected downstream of the sensor coil (6), **characterized**
**in that** the movable magnet is, as an inert mass, a magnet coil (4) of an electromagnet,
**in that** a permanent magnet (3) is arranged fixed to the measured object in the vicinity of the magnetic coil (4) so that when there is an acceleration, and thus a relative movement between the magnetic coil (4) and the permanent magnet (3), a velocity-dependent initialization voltage can be induced, and
**in that** an initialization device (7) with a threshold voltage circuit and a voltage generator is connected downstream of the magnetic coil (4), which initialization device (7) switches the voltage generator to excite the magnetic coil (4) with a precisely defined magnetic field when a specific value of an induced initialization voltage is exceeded.

2. Inductive acceleration sensor according to Claim 1, **characterized in that** the magnetic coil (4) is composed of a core sleeve (41) which essentially constitutes inert mass, and of a coil winding (42) which is attached thereto.

3. Inductive acceleration sensor according to Claim 1 or Claim 2, **characterized in that** the evaluation device which is connected downstream of the sensor coil (6) comprises a second threshold value circuit (20) in which an induced voltage value can be compared with a threshold value in accordance with a specific acceleration value and a switching signal can be output after this threshold value is exceeded.

4. Inductive acceleration sensor according to one of Claims 1 to 3, **characterized in that** the acceleration sensor is mounted, as crash sensor, in a vehicle with a triggerable vehicle occupant protection device, and the vehicle occupant protection device can be triggered by the switching signal.

5. Inductive acceleration sensor according to one of Claims 1 to 4, **characterized in that** the vehicle occupant protection device can be electrically fired in order to trigger it, and the firing circuit can be activated by the switching signal.

6. Inductive acceleration sensor according to one of Claims 1 to 5, **characterized in that** the permanent magnet (3) is a bar magnet which is located in an end core region of the magnetic coil (4), which region is no longer passed over when there is a relatively large deflection, and said magnetic coil (4) is displaceably held in a core sheath (2) of the sensor coil (6).

7. Inductive acceleration sensor according to one of Claims 1 to 6, **characterized in that** the magnetic coil (4) is held supported by means of at least one spring (5) in the direction of the acceleration which is to be registered.

8. Inductive acceleration sensor according to one of Claims 1 to 7, **characterized in that** the first threshold value unit of the initialization device and/or the second threshold value unit of the evaluation device are each embodied as first and/or second Schmitt triggers (7, 20), the threshold value being tapped in each case as an input-end comparison voltage of associated voltage dividers (14, 16), and when the comparison voltage in the first Schmitt trigger is exceeded, the output of which is fed back to excite the magnetic coil with a larger current, and when the comparison voltage in the second Schmitt trigger is exceeded the output connected to a triggering unit switches as switching signal from "low" to "high".

## Revendications

1. Capteur d'accélération inductif,
comprenant une bobine de capteur (6) qui est reliée fixement à l'objet à mesurer,
comprenant un aimant mobile (4) dans la région de la bobine de capteur (6), lequel est maintenu mobile dans la direction, et à l'apparition, d'une accélération à mesurer par rapport à l'objet à mesurer et donc par rapport à la bobine de capteur (6), de sorte que pour une vitesse relative entre l'aimant (4) et la bobine de capteur (6), une tension puisse y être induite en fonction de la vitesse, et
comprenant un dispositif d'analyse monté après la bobine de capteur (6),
caratérisé en ce que
l'aimant mobile, en tant que masse inerte, est une bobine magnétique (4) d'un électroaimant,
dans la région de la bobine magnétique (4), un aimant permanent (3) est disposé fixement par rapport à l'objet à mesurer, de sorte qu'en cas d'accélération et donc de mouvement relatif entre la bobine magnétique (4) et l'aimant permanent (3), une tension d'initialisation puisse être induite en fonction de la vitesse, et
en aval de la bobine magnétique (4) est monté un dispositif d'initialisation (7) avec un circuit à seuil et un transmetteur de tension, qui, dans le cas d'un dépassement d'une valeur déterminée d'une tension d'initialisation induite, commute le transmetteur de tension pour l'excitation de la bobine magnétique (4) avec un champ magnétique défini précisément.

2. Capteur d'accélération inductif selon la revendication 1, **caractérisé en ce que** la bobine magnétique (4) se compose d'un noyau (41) représentant essentiellement la masse inerte et d'un enroulement de bobine (42) monté sur celui-ci.

3. Capteur d'accélération inductif selon la revendication 1 ou la revendication 2, **caractérisé en ce que** le dispositif d'analyse monté après la bobine de capteur (6) comprend un deuxième circuit à seuil (20), dans lequel une valeur de tension induite peut être comparée à une valeur seuil correspondant à une valeur d'accélération déterminée et un signal de commutation peut être émis après le dépassement de cette valeur seuil.

4. Capteur d'accélération inductif selon l'une quelconque des revendications 1 à 3, **caractérisé en ce que** le capteur d'accélération est utilisé comme capteur de collision dans un véhicule avec un dispositif de protection des occupants déclenchable et le dispositif de protection des occupants est déclenchable par le signal de commutation.

5. Capteur d'accélération inductif selon l'une quelconque des revendications 1 à 4, **caractérisé en ce que** le dispositif de protection des occupants peut être allumé électriquement pour son déclenchement et le circuit d'allumage peut être activé par le signal de commutation.

6. Capteur d'accélération inductif selon l'une quelconque des revendications 1 à 5, **caractérisé en ce que** l'aimant permanent (3) est un aimant droit qui se trouve dans une zone du noyau de la bobine magnétique (4) du côté de l'extrémité, qui n'est plus balayée pour une déviation relativement grande, et celle-ci est maintenue de manière à pouvoir coulisser dans un noyau (2) de la bobine de capteur (6).

7. Capteur d'accélération inductif selon l'une quelconque des revendications 1 à 6, **caractérisé en ce que** la bobine magnétique (4) est maintenue supportée dans la direction de l'accélération à détecter par au moins un ressort (5).

8. Capteur d'accélération inductif selon l'une quelconque des revendications 1 à 7, **caractérisé en ce que** la première unité de valeur de seuil du dispositif d'initialisation et/ou la deuxième unité de valeur de seuil du dispositif d'analyse sont réalisées chacune en tant que première et/ou deuxième bascules de Schmitt (7, 20), la valeur seuil étant saisie à chaque fois en tant que tension comparative, du côté de l'entrée, de diviseurs de tension associés (14, 16) et lors du dépassement de la tension comparative dans la première bascule de Schmitt, sa sortie est rétrocouplée pour l'excitation de la bobine magnétique à un courant plus important et lors du dépassement de la tension comparative dans la deuxième bascule de Schmitt, la sortie connectée à une unité de déclenchement commute en tant que signal de commutation de "bas" à "haut".
